# FASCICULE DE BREVET EUROPEEN

(11) **EP 3 251 004 B1**
(45) Date de publication et mention de la délivrance du brevet: **22.04.2020**
(21) Numéro de dépôt: 16705041.8
(22) Date de dépôt: 27.01.2016
(51) Int. Cl.: G06F 7/10, G07B 15/00

(54) **SYSTEME INTERACTIF TACTILE ET BORNE DE COMMANDE**
INTERAKTIVES BERÜHRUNGSSYSTEM UND STEUERUNGSENDGERÄT
INTERACTIVE TOUCH SYSTEM AND CONTROL TERMINAL

(30) Priorité: 27.01.2015 FR 1550632
(43) Date de publication de la demande: 06.12.2017
(60) Demande divisionnaire: 20163452.4
(73) Titulaire: Merim Digital Media, 36800 St Gaultier (FR)
(72) Inventeur: MULLERIS, Jean-Jacques, 92200 Neuilly sur Seine (FR)
(74) Mandataire: Debay, Damien
(86) Numéro de dépôt international: PCT/EP2016/051650
(87) Numéro de publication internationale: WO 2016/120304

(56) Documents cités:
- CN-B- 103 701 047
- JP-A- 2004 336 941
- US-A- 2 130 250
- US-A- 5 636 101
- US-A1- 2004 140 350
- US-A1- 2005 277 477
- US-A1- 2011 234 514
- US-B1- 6 688 518

## Description

### DOMAINE TECHNIQUE DE L'INVENTION

La présente invention se rapporte au domaine des systèmes à interaction homme/machine. Plus particulièrement, l'invention concerne un système interactif tactile et une borne de commande et de paiement.

### ARRIERE-PLAN TECHNOLOGIQUE DE L'INVENTION

Il est connu de l'art antérieur des bornes de commande comprenant une interface homme machine, permettant aux utilisateurs d'interagir, la plupart du temps via un écran tactile, avec la borne en question. Les publications US6688518, US 2005/277477 , JP 2004 336941 A, CN 103 701 047 B et US 2 130 250 A divulguent de tels dispositifs. Ces bornes sont destinées à faciliter et automatiser les commandes réalisées par les utilisateurs, par exemple de billets de transports ou de nourriture. Les données affichées sur l'écran de la dalle tactiles sont des sélections de menus et comportent des éléments interactifs permettant de sélectionner et de commander un menu. De nombreux restaurants et entreprises de transport sont équipés de ce type de bornes de commande. Cependant, la réalisation de telles bornes est compliquée et délicate. Dans les bornes il existe de nombreux équipements, par exemple des scanners à codes barre, des imprimantes, des claviers, des lecteurs de cartes, fonctionnant tous avec des tensions et des puissances d'alimentation différentes. Mais il existe aussi des dalles tactiles qui sont reliés à un contrôleur des signaux vidéo (CSV), à un contrôleur tactile (CT) et à un contrôleur du système de rétroéclairage (CRSE). Uniquement pour la dalle tactile, cela nécessite un certain nombre de câblages qu'il faut faire passer dans le boitier de la borne. Cela engendre un câblage très complexe, fastidieux et onéreux à mettre en place et à entretenir. L'objectif de l'invention est de réduire le nombre de câbles qui circule dans la borne et de limiter les problèmes de câblage.

La présente invention a donc pour objet de proposer une borne de commande permettant de pallier au moins une partie des inconvénients de l'art antérieur, en allégeant le câblage et en séparant les signaux provenant de l'électronique de la borne, telle que définie dans la revendication 1.

Selon l'invention, la borne comprend deux systèmes interactifs tactiles disposés dos à dos, chaque dalle étant pilotée par son propre ensemble électronique, chaque ensemble électronique étant relié à une pluralité d'équipements complémentaires compris dans les systèmes interactifs, chaque élément de la borne n'étant par ailleurs relié qu'à un seul et unique ensemble électronique, les deux ensembles électroniques de la borne étant indépendants.

Selon une autre particularité, le système de fermeture du caisson est piloté par une carte électronique alimentée par une alimentation électrique supplémentaire comprise dans la borne.

Selon une autre particularité, chaque ensemble électronique de la borne est relié à des équipements complémentaires parmi lesquels un module lecteur de codes à barre, une imprimante, et un système monétique comprenant un lecteur de carte bancaire, un haut parleur et un moyen de saisie.

Selon une autre particularité, la borne comprend au moins une sonde de température et au moins un ventilateur reliés d'une part à la carte électronique de contrôle de fermeture du caisson et d'autre part à l'alimentation supplémentaire de la borne, la mise sous tension du ventilateur étant commandée par la carte électronique lorsque la température interne de la borne détectée par le capteur de température dépasse une valeur seuil enregistrée dans un espace mémoire de la carte électronique.

L'invention, avec ses caractéristiques et avantages, ressortira plus clairement à la lecture de la description faite en référence au dessin annexé dans lequel :
La figure 1 représente un schéma synoptique du montage électronique d'un système interactif tactile dans un mode de réalisation,
La figure 2 représente un schéma synoptique en coupe d'un lecteur de codes à barre selon un mode de réalisation,
La figure 3 représente une vue en perspective d'une borne de commande dans un mode de réalisation,
La figure 4 représente une vue en perspective d'une borne ouverte comprenant deux systèmes interactifs tactiles, mettant en évidence la face externe d'un système interactif et la face interne de l'autre système interactif,
La figure 5 représente un schéma synoptique du montage électronique de la borne de commande dans un mode de réalisation.

### DESCRIPTION DES MODES DE REALISATION PREFERES DE L'INVENTION

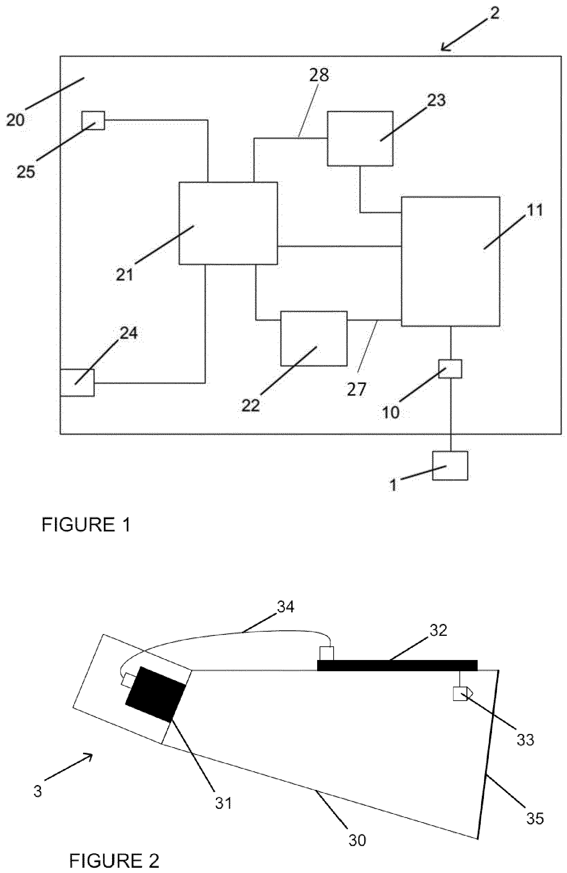

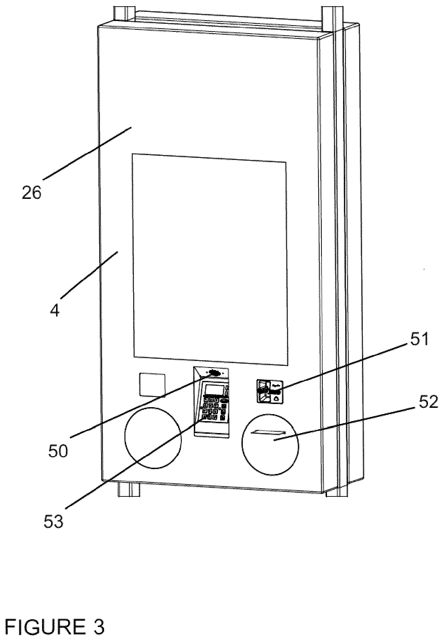

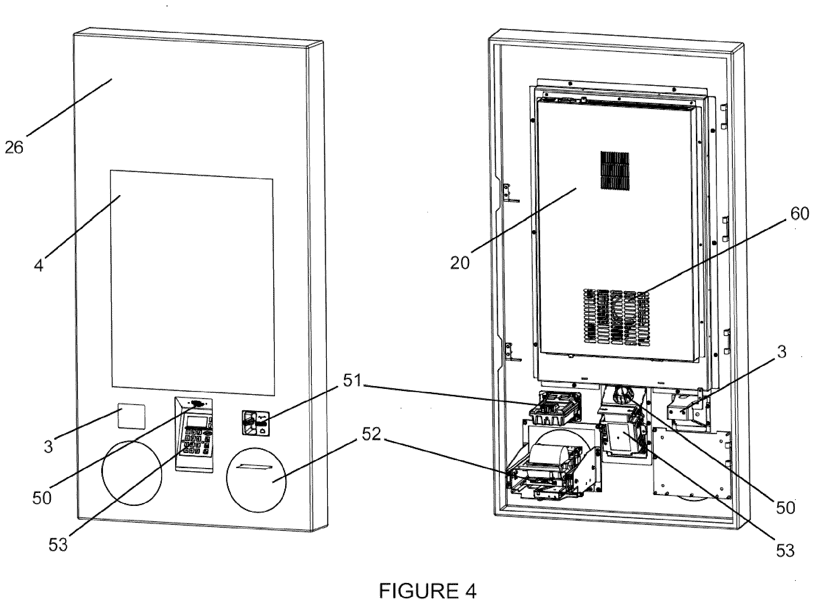

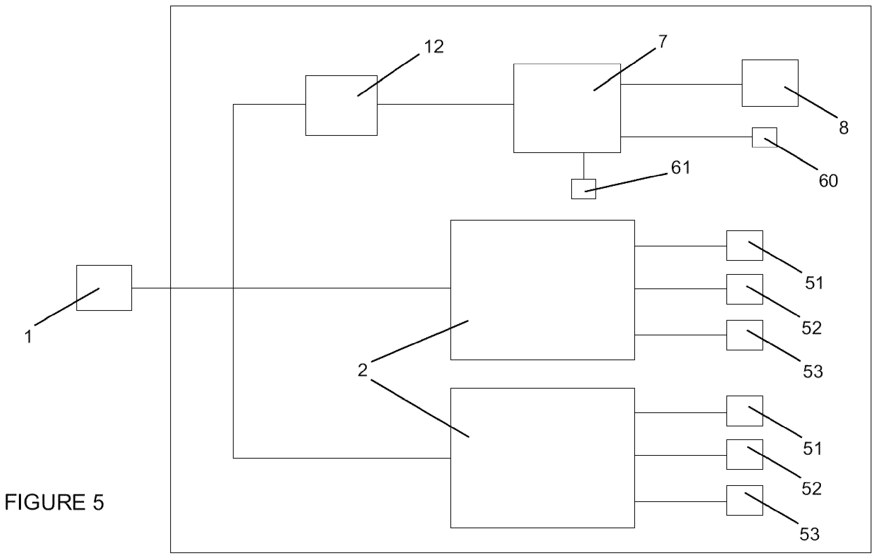

En référence aux figures 1 à 5, l'invention va maintenant être décrite.

Dans un mode de réalisation, la borne de commande selon l'invention comprend un caisson (4), ce caisson comportant un dispositif de fermeture (8).

A titre d'exemple non limitatif, ce dispositif de fermeture (8) peut être un système de gâches électroniques qui permettent de contrôler au moins l'ouverture et la fermeture des portes du caisson. Dans un mode de réalisation, le système de fermeture (8) du caisson (4) est piloté par une carte électronique (7) alimentée par une alimentation électrique supplémentaire (12) comprise dans la borne et avantageusement autonome de l'alimentation du système interactif tactile (2).

Ce caisson, qui est l'habillage de la borne, intègre en son sein tous les éléments formant la borne de commande. Dans un mode de réalisation, la borne comprend une pluralité d'ouvertures, par exemple et de manière non limitative usinée dans au moins une des faces du caisson, de manière à ce que l'utilisateur ait accès à au moins une partie de éléments composant la borne de commande. Dans un mode de réalisation, le caisson comprend en son sein une pluralité de barre de renfort, par exemple et de manière non limitative en acier, sur lesquelles sont incorporés les différents éléments compris dans la borne de commande selon l'invention.

Dans un mode de réalisation, la borne de commande comprend au moins un système interactif tactile (2), ce système étant l'interface homme/machine de la borne de commande. Ce système interactif tactile va maintenant être décrit.

Dans un mode de réalisation, le système interactif tactile (2) comprend un écran tactile (20) sur lequel est collé une surface dure protectrice (26), par exemple et de manière non limitative en verre trempée. Dans un mode de réalisation préférentiel, cette surface dure est en saillie. Ainsi, lorsque le système interactif tactile (2) est monté dans la borne de commande, cette surface dure en saillie de la dalle tactile tombe en affleurement avec le caisson (4) de la borne de commande. Dans un mode de réalisation, le système interactif tactile (2) comprend un ensemble électronique (21) au moins apte à commander l'alimentation du système de rétroéclairage de la dalle tactile (20), et à commander l'affichage de la dalle tactile via des signaux de contrôle, par exemple des signaux vidéo. Dans un mode de réalisation, cet ensemble électronique est incorporé au dos de la dalle tactile (20) à proximité des barres de renforts de la borne de commande.

Dans un mode de réalisation, le système interactif tactile comprend un générateur électrique (1, 11) apte à alimenter au moins l'ensemble électronique (21) relié à la dalle tactile, le générateur comportant en outre une pluralité de sorties aux tensions, intensités et puissances prédéfinies. Dans un mode de réalisation et de manière préférentielle, l'ensemble électronique comprend un interrupteur d'alimentation (25), par exemple un bouton on/off, permettant de contrôler l'arrivée d'énergie électrique dans l'ensemble électronique.

Dans un mode de réalisation, l'ensemble électronique (21) et le générateur électrique (1 ,11) du système interactif (2) vont maintenant être décrits plus précisément.

Dans un mode de réalisation, le générateur électrique comprend une alimentation électrique (11) directement reliée au secteur (1). De manière préférentielle, un filtre (10), par exemple un filtre *« Schaffner »,* est disposé entre le secteur et l'alimentation électrique. Cette alimentation électrique (11) comprend une pluralité de sortie ayant des tensions, intensités et puissances différentes, en fonction du type d'équipement à alimenter. Par exemple et de manière non limitative, les tensions disponibles parmi les sorties de l'alimentation sont 5V, 12V et 24V. Dans la suite de la description, nous utiliserons l'expression « alimentation électrique » pour faire référence au générateur électrique, ceci pour plus de commodité.

L'ensemble électronique (21) selon l'invention comprend une carte mère reliée à une sortie de l'alimentation électrique, comportant elle-même au moins un processeur et au moins un espace mémoire, par exemple un disque dur. La carte mère comprend une pluralité de fiches entrée/sortie, par exemple et de manière non limitative au format RS 232, ou RS 422, ou RS 485 ou USB, permettant d'y connecter les différents éléments du système interactif tactile et de la borne de commande.

Dans un mode de réalisation, un contrôleur tactile (24) relié à la dalle tactile (20) est connecté, via une fiche prévue à cet effet, à la carte mère de l'ensemble électronique. Ce contrôleur tactile, bien connu de l'homme du métier, permet la conversion du signal, généré par la dalle suite à un toucher de l'écran, en un signal électrique interprétable par la carte de mère de l'ensemble électronique.

Dans un mode de réalisation, la carte mère de l'ensemble électronique (21) est reliée à une carte électronique de contrôle (23) du système de rétroéclairage de la dalle tactile. Cette carte électronique de contrôle du système de rétroéclairage, comprise dans la dalle tactile, est directement reliée à une sortie de l'alimentation électrique (11). La liaison entre l'ensemble électronique, la carte électronique de contrôle du système de rétroéclairage et l'alimentation électrique s'effectue dans un mode préférentiel à l'aide d'un câble en Y (28). Cette carte électronique (23) est également relié et pilotée par la carte mère de l'ensemble électronique (21), qui in fine contrôle la mise sous ou hors tension du système de rétroéclairage de la dalle tactile (20). Par exemple et de manière non limitative, le système de rétroéclairage de la dalle tactile (20) comprend une pluralité de diodes électroluminescentes. Le système de rétroéclairage est directement relié à l'alimentation électrique, par exemple et de manière non limitative via une sortie 24V.

Dans un mode de réalisation, la carte mère de l'ensemble électronique (21) est reliée à une carte électronique de contrôle (22) des signaux vidéo à destination de la dalle tactile. Cette carte électronique (22) de contrôle des signaux vidéo, comprise dans la dalle tactile (20), est directement reliée à une sortie de l'alimentation électrique (11). La liaison entre l'ensemble électronique, la carte électronique de contrôle du système vidéo et l'alimentation électrique s'effectue dans un mode préférentiel à l'aide d'un câble en Y (27). Cette carte électronique (22) est également reliée et pilotée par la carte mère de l'ensemble électronique (21), et assure la conversion des signaux de contrôle issus de la carte mère de l'ensemble électronique en signaux vidéo à destination de la dalle tactile (20), afin de permettre l'affichage d'informations pour des utilisateurs.

La carte mère de l'ensemble électronique comprend des moyens de communications tels que Bluetooth ou Wi-Fi pour recevoir des données à afficher sur l'écran et/ou des mises à jour de programme gérant le fonctionnement du système interactif tactile.

Dans un mode de réalisation, le système interactif tactile (2) comprend une pluralité d'équipements électriques et/ou électroniques complémentaires, disposés sur les barres de renfort du caisson de la borne de commande. Ces équipements complémentaires sont tous reliés à la carte mère de l'ensemble électronique (21), ledit ensemble étant apte à piloter chacun de ces équipements complémentaires. D'autre part et dans un mode de réalisation préférentiel, chaque élément complémentaire est directement relié à une sortie de l'alimentation électrique (11), de manière à être directement alimenté en électricité à des tensions, intensité et puissance compatibles avec chaque élément complémentaire. Dans un mode de réalisation alternatif, c'est la carte mère de l'ensemble électronique (21) qui fournit l'énergie nécessaire au fonctionnement des équipements complémentaires reliés à cette dernière. Dans un autre mode alternatif, les équipements complémentaires sont soient alimentés par l'ensemble électronique (21) soient dans certain cas reliés directement à l'alimentation centralisée (11).

Ainsi, l'ensemble électronique communique par des moyens de communication et génère des alimentations pour les équipements complémentaires.

Dans un mode de réalisation, parmi ces équipements complémentaires, le système interactif tactile comprend un module lecteur de codes à barre (3), installé pour permettre la lecture de codes à barre, par exemple et de manière non limitative sur des cartes de fidélités, des bons de réductions, ou différents codes barre affichables sur systèmes nomades (téléphones portables, tablettes tactiles) des utilisateurs du système interactif.

Dans un mode de réalisation, le module lecteur de codes à barre (3) comprend un coffrage (30) dont une face est une vitre (35) pour permettre la lecture de codes à barre, coffrage dans lequel est incorporé un scanner (31) muni par exemple d'une carte de décodage et d'un capteur d'image pour la lecture des codes à barre, ce scanner étant relié via une nappe (34) à une carte contrôleur (32) comprise dans le coffrage du lecteur. Dans un mode de réalisation, le scanner (31) est relié à la carte mère de l'ensemble électronique (21), via une interface USB (de l'anglais *Universal Serial Bus*), tandis que la carte contrôleur est reliée au scanner (31) à une sortie de l'alimentation électrique (11), par exemple une sortie 5V. Dans ce mode de réalisation, le scanner (31) alimente donc la carte contrôleur (32) du scanner. Dans un mode de réalisation alternatif, la carte contrôleur (32) est alimentée par l'ensemble électronique (21) par exemple via une interface USB. Dans ce mode de réalisation, c'est la carte contrôleur qui alimente le scanner du lecteur de codes à barre. Dans un mode de réalisation, le lecteur comprend également un capteur de détection (33), par exemple un capteur infrarouge, reliée à la carte contrôleur (32) du scanner et alimentée par cette dernière, détecte la présence d'un objet placé devant la vitre du lecteur. Ainsi, lorsqu'un objet est détecté devant la vitre (35), le capteur de détection envoie un signal à la carte contrôleur qui commande au scanner sa mise sous tension. Le scanner effectue une lecture et enregistre, grâce au capteur d'image, les données qui sont envoyées suivant les deux modes précités via la nappe vers la carte contrôleur qui elle-même, si l'objet lu comprend un code dont la structure est celle d'un code à barre, par exemple un code à barre classique ou un code à barre à deux dimensions, envoie ces données à la carte mère de l'ensemble électronique ou directement via l'interface USB du scanner si l'objet lu comprend un code dont la structure est celle d'un code à barre, par exemple un code à barre classique ou un code à barre à deux dimensions, ces données étant envoyées à la carte mère de l'ensemble électronique. La carte mère de l'ensemble électronique (21) associe alors les données issues de la lecture par le lecteur de codes à barre (3) avec un élément présent dans au moins une base de données enregistrée dans un espace mémoire de l'ensemble électronique. Par exemple et de manière non limitative, un code barre peut être associé à une carte de fidélité nominative, à un billet de transport précommandé, à un bon de réduction.

Dans un mode de réalisation préférentiel, la vitre (35) du lecteur de codes à barre a reçu un traitement antireflet sur les deux faces afin de faciliter la détection et la lecture des codes à barre.

Dans un mode de réalisation, parmi ces équipements complémentaires, le système interactif tactile comprend un système monétique pour permettre aux utilisateurs d'effectuer des transactions via la borne de commande comprenant au moins un système interactif tactile.

Dans un mode de réalisation, le système monétique comprend un lecteur de carte bancaire (51) et un moyen de saisie (53), par exemple un clavier alphanumérique. Dans un mode de réalisation, le système monétique comprend également un haut parleur (50), relié à la carte mère de l'ensemble électronique via une prise audio. Le haut parleur est, de manière préférentielle, directement alimenté par l'amplificateur audio interne de la carte mère de l'ensemble électronique (21). Dans un autre mode de réalisation, le haut parleur est directement branché sur les sorties audio externes de la carte mère de l'ensemble électronique (21).

Dans un mode de réalisation, le lecteur de cartes bancaires (51) est relié au moyen de saisie (53), qui est lui-même relié d'une part à l'alimentation électrique (11), par exemple via une sortie 12V, et d'autre part à la carte mère de l'ensemble électronique (21). De cette manière, c'est le moyen de saisie qui alimente le lecteur de carte. Dans un autre mode de réalisation, le lecteur de cartes bancaires (51) est relié au moyen de saisie (53), qui est lui-même relié à une sortie RS 232 alimentée par une sortie 12V de la carte mère de l'ensemble électronique (21). De cette manière, c'est le moyen de saisie qui alimente le lecteur de carte.

Dans un mode de réalisation, parmi ces équipements complémentaires, le système interactif tactile comprend une imprimante (52) reliée à la carte mère de l'ensemble électronique (21), l'imprimante étant directement alimentée par l'alimentation (11), par exemple via une sortie 24V. Cette imprimante permet l'impression de tickets décrivant le résultat de l'interaction entre un utilisateur et le système interactif tactile (2) de la borne, par exemple et de manière non limitative des tickets de caisse.

Dans un mode de réalisation, la borne de commande selon l'invention comprend deux systèmes interactifs tactiles (2) disposés dos à dos. Chaque système interactif étant piloté par son propre ensemble électronique (21), les deux systèmes interactifs sont par conséquent totalement indépendants. Cela signifie que deux utilisateurs peuvent interagir avec la borne en même temps, de manière indépendante. De la même manière, chaque système interactif tactile (2) de la borne comprend ses propres équipements complémentaires reliés à l'ensemble électronique du système interactif correspondant, si bien que chaque équipement complémentaire de la borne est relié à un seul et unique ensemble électronique (21).

Dans un mode de réalisation, le système de fermeture du caisson (8) de la borne est piloté par une carte électronique (7) directement alimentée par une alimentation électrique supplémentaire (12) comprise dans la borne et par exemple reliée au secteur (1), la sortie en tension de cette alimentation supplémentaire étant par exemple et de manière non limitative de 12V. Dans un mode de réalisation, le système de fermeture du caisson est pilotable manuellement par exemple à l'aide d'une clef mécanique, par exemple en cas de défaillance électrique et/ou électronique.

Dans un mode de réalisation, le système de fermeture (8) comprend au moins un détecteur de clef électronique relié à la carte électronique (7) contrôlant la fermeture ou l'ouverture du caisson (4). En effet, lorsqu'un utilisateur détient une clef électronique, le détecteur détecte la clef correspondante et envoie le signal de détection à la carte électronique (7) qui commande alors l'ouverture du caisson (4).

Dans un mode de réalisation, la borne de commande comprend au moins une sonde de température (61) et un ventilateur (60), tous deux reliés à la carte électronique (7) de contrôle de fermeture du caisson (4) de la borne. D'autre part, la sonde et le ventilateur sont directement reliés à l'alimentation supplémentaire (12) de la borne. Dans un mode de réalisation, lorsque la température à l'intérieur de la borne de commande dépasse une certaine valeur enregistrée dans une zone mémoire de la carte électronique (7) commandant la fermeture du caisson, ladite carte électronique commande la mise sous tension du ventilateur (61) pour déclencher une circulation d'air dans la borne de commande, facilitant le refroidissement de l'air à l'intérieur du caisson.

La présente demande décrit diverses caractéristiques techniques et avantages en référence aux figures et/ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine défini par la portée des revendications jointes, et l'invention ne doit pas être limitée aux détails donnés ci-dessus.

## Revendications

1. Borne de commande comprenant :
• un caisson (4) comportant au moins une porte équipée d'un dispositif de fermeture (8), la porte comportant en outre une pluralité d'ouvertures et montée pivotante sur un cadre,
• au moins un système interactif tactile comprenant :
∘ une alimentation électrique (11) reliée au secteur (1) comprenant une pluralité de sorties ayant des tensions, intensités et puissance différentes, en fonction du type d'équipement à alimenter,
∘ une dalle tactile (20), comportant une surface dure protectrice (26) collée à l'écran tactile de la dalle, la surface dure protectrice (26) étant en saillie sur la dalle et d'une épaisseur adaptée pour tomber dans une ouverture de la porte en affleurement avec la surface extérieure du caisson,
∘ un ensemble électronique (21), comprenant une carte mère reliée à l'alimentation électrique (11) et comportant elle-même au moins un processeur et au moins un espace mémoire ainsi qu'une pluralité de fiches entrées/sorties permettant d'y connecter les différents éléments du système interactif tactile et de la borne de commande,
ledit ensemble électronique (21) étant relié électroniquement à la dalle tactile, assurant au moins la fourniture des signaux de commande et de contrôle de la dalle ainsi que les données à afficher sur l'écran de la dalle et comprenant des moyens de communication aptes à recevoir les données à afficher sur l'écran et des mises à jour de programme,
∘ une carte de conversion (22) de signaux de contrôle de la dalle tactile, reliée à la dalle tactile, étant reliée à l'alimentation électrique (11) et également reliée et pilotée par l'ensemble électronique (21), étant apte à assurer la conversion des signaux de contrôle issus de l'ensemble électronique (21), en signaux vidéo à destination de l'écran de la dalle tactile (20) correspondante,
∘ une carte électronique (23) apte à contrôler l'allumage du système de rétroéclairage, étant reliée à l'alimentation électrique (11) et également reliée et pilotée par l'ensemble électronique (21),
∘ un contrôleur tactile (24) relié à la dalle tactile (20) est connecté à l'ensemble électronique (21), permettant la conversion du signal, généré par la dalle suite à un toucher de l'écran, en un signal électrique interprétable par l'ensemble électronique,
• des équipements complémentaires parmi lesquels :
∘ un module lecteur de codes à barres (3), et/ou
∘ une imprimante (52), et/ou
∘ un système monétique comprenant au moins :
a. un lecteur de carte bancaire (51), et
b. un moyen de saisi (53),
**caractérisée en ce que**
- ledit ensemble électronique (21), ladite carte de conversion (22), ladite carte électronique (23) et ledit contrôleur tactile (24) de la dalle correspondante étant incorporés au dos de ladite dalle tactile, les alimentations pour les autres équipements passant dans des barres de renfort du caisson, lesdits équipements complémentaires étant tous reliés et commandés par ledit ensemble électronique (21) et alimentés par l'ensemble électronique (21), ou ladite alimentation électrique (11) du système interactif tactile (2) correspondant,
- ledit système interactif tactile et lesdits équipements complémentaires sont incorporés dans les ouvertures de la porte,
la borne de commande étant en outre **caractérisée en ce qu'**elle comprend deux systèmes interactifs tactiles disposés dos à dos, chaque dalle (20) étant pilotée par son propre ensemble électronique (21), chaque ensemble électronique étant relié à une pluralité d'équipements complémentaires compris dans les systèmes interactifs, chaque élément de la borne n'étant par ailleurs relié qu'à un seul et unique ensemble électronique (21), les deux ensembles électroniques (21) de la borne étant indépendants.

2. Borne de commande selon la revendication précédente, **caractérisée en ce que** le caisson comprend une pluralité de barres de renfort qui sont de préférence disposées de manière à former un renfort central en forme de X.

3. Borne de commande selon l'une quelconque des revendications 1 à 2, **caractérisée en ce que** le système monétique comprend également un haut-parleur (50) relié à l'ensemble électronique (21) via une prise audio.

4. Borne de commande selon l'une quelconque des revendications 1 à 3, **caractérisée en ce que** le module lecteur de codes à barres (3) comprend un coffrage (30) dont une face est une vitre (35) pour permettre la lecture de codes à barres et incorporant un scanner (31), le scanner (31) étant relié via une nappe (34) à une carte contrôleur (32) comprise également dans le coffrage du lecteur.

5. Borne de commande selon la revendication 4, **caractérisée en ce que** le module lecteur de codes à barres (3) comprend également un capteur de détection (33) relié et alimenté par la carte contrôleur (32), ledit capteur de détection (33) est configuré :
• pour détecter la présence d'un objet placé devant la vitre 35, et
• pour envoyer un signal à la carte contrôleur (32) qui commande au scanner (31) sa mise sous tension.

6. Borne de commande selon l'une quelconque des revendications 4 à 5, **caractérisée en ce que** la vitre (35) a reçu un traitement antireflet sur les deux faces afin de faciliter la détection et la lecture des codes à barres.

7. Borne de commande selon l'une quelconque des revendications 1 à 6, **caractérisée en ce que** le système de fermeture (8) du caisson (4) est piloté par une carte électronique (7) alimentée par une alimentation électrique supplémentaire autonome (12) comprise dans la borne.

8. Borne de commande selon la revendication 7, **caractérisée en ce qu'**elle comprend au moins une sonde de température (61) et au moins un ventilateur (60) relié d'une part à la carte électronique de contrôle (7) de fermeture du caisson (8) et d'autre part à l'alimentation supplémentaire (12) de la borne, la mise sous tension du ventilateur étant commandée par la carte électronique (7) lorsque la température interne de la borne détectée par le capteur de température (61) dépasse une valeur seuil enregistrée dans un espace mémoire de la carte électronique (7).

9. Borne de commande selon la revendication 8, **caractérisée en ce que** chaque ensemble électronique (21) de la borne est relié à des équipements complémentaires parmi lesquels un module lecteur de codes à barres (3), une imprimante (52), et un système monétique comprenant un lecteur de carte bancaire (51), un haut-parleur (50) et un moyen de saisie (53).

## Patentansprüche

1. Steuerterminal umfassend:
• einen Kasten (4) mit mindestens einer Tür, die mit einer Schließvorrichtung (8) ausgestattet ist, wobei die Tür weiterhin eine Vielzahl von Öffnungen aufweist und schwenkbar an einem Rahmen montiert ist,
• mindestens ein interaktives Berührungssystem umfassend:
∘ eine Stromversorgung (11), die mit dem Netz (1) verbunden ist und eine Vielzahl von Ausgängen mit unterschiedlichen Spannungen, Intensitäten und Leistungen aufweist, die abhängig von der Art der zu versorgenden Vorrichtungen sind,
∘ ein Touch Panel (20) mit einer auf den Touchscreen des Panels geklebten schützenden harten Oberfläche (26), wobei die schützende harte Oberfläche (26) aus dem Panel herausragt und eine Dicke aufweist, die geeignet ist, in eine Öffnung der Tür zu fallen, die bündig mit der Außenfläche des Kastens ist,
∘ eine elektronische Anordnung (21), die eine mit der Stromversorgung (11) verbundenen Hauptplatine und die selbst mindestens einen Prozessor und mindestens einen Speicherplatz sowie eine Vielzahl von Eingangs-/Ausgangssteckern umfasst, die es ermöglichen die verschiedenen Elemente des interaktiven Touch-Systems und des Steuerterminals zu verbinden,
wobei die elektronische Anordnung (21) mit dem Touch Panel elektronisch verbunden ist, wobei sie mindestens die Versorgung der Befehls- und Steuersignale des Panels sowie der auf dem Bildschirm des Panels anzuzeigenden Daten sicherstellt und Kommunikationsmittel aufweist, die dazu geeignet sind, die auf dem Bildschirm anzuzeigenden Daten und Programmaktualisierungen zu empfangen,
∘ eine mit dem Touch Panel (20) verbundene Konvertierungskarte (22) der Kontrollsignale des Touch Panels, die mit der Stromversorgung (11) verbunden ist und auch mit der elektronischen Anordnung (21) verbunden ist und von der elektronischen Anordnung (21) gesteuert wird, wobei sie dazu geeignet ist, die Umwandlung der aus der elektronischen Anordnung (21) stammenden Kontrollsignale in Videosignale für den Bildschirm des entsprechenden Touch Panels (20) durchzuführen,
∘ eine elektronische Karte (23), die dazu geeignet ist, das Einschalten des Hintergrundbeleuchtungssystems zu steuern, wobei sie mit der Stromversorgung (11) verbunden ist und auch mit der elektronischen Anordnung (21) verbunden ist und von der elektronischen Anordnung (21) gesteuert wird,
∘ einen mit dem Touch Panel verbundenen Berührungsschalter (24), der an der elektronischen Anordnung (21) angeschlossen ist, der die Umwandlung des von dem Panel infolge einer Berührung des Schirmes erzeugten Signals in ein elektrisches Signal ermöglicht, das von der elektronischen Anordnung interpretiert werden kann,
• zusätzliche Vorrichtungen einschließlich:
∘ eines Barcode-Lesemoduls (3), und/oder
∘ eines Druckers (52), und/oder
∘ eines elektronischen Zahlungssystems mit mindestens:
a. einem Bankkartenleser (51), und
b. einem Eingabemittel (53),
**dadurch gekennzeichnet, dass**
- die elektronische Anordnung (21), die Konvertierungskarte (22), die elektronische Karte (23) und der Berührungsschalter (24) des entsprechenden Touch Panels auf der Rückseite des Touch Panels eingebaut sind, wobei die Stromversorgungen für die anderen Vorrichtungen in Verstärkungsstangen des Kastens verlaufen, wobei alle zusätzlichen Vorrichtungen mit der elektronischen Anordnung (21) verbunden sind und von der elektronischen Anordnung (21) gesteuert werden und von der elektronischen Anordnung (21) oder der Stromversorgung (11) des entsprechenden interaktiven Berührungssystems (2) versorgt werden,
- das interaktive Berührungssystem und die zusätzlichen Vorrichtungen in den Öffnungen der Tür eingebaut sind,
wobei das Steuerterminal weiterhin **dadurch gekennzeichnet ist, dass** es zwei Rücken an Rücken angeordnete interaktive Berührungssysteme aufweist, wobei jedes Panel (20) von seiner eigenen elektronischen Anordnung (21) gesteuert wird, wobei jede elektronische Anordnung mit einer Vielzahl von in den interaktiven Systemen enthaltenen zusätzlichen Vorrichtungen verbunden ist, wobei jedes Element des Terminals nur mit einer einzigen elektronischen Anordnung (21) verbunden ist, wobei die zwei elektronischen Anordnungen (21) des Terminals unabhängig voneinander sind.

2. Steuerterminal nach dem vorherigen Anspruch, **dadurch gekennzeichnet, dass** der Kasten eine Vielzahl von Verstärkungsstangen aufweist, die vorzugsweise so angeordnet sind, dass sie eine X-förmige zentrale Verstärkung bilden.

3. Steuerterminal nach einem der Ansprüche 1 bis 2, **dadurch gekennzeichnet, dass** das Zahlungssystem weiterhin einen Lautsprecher (50) aufweist, der mit der elektronischen Anordnung (21) über eine Audiobuchse verbunden ist.

4. Steuerterminal nach einem der Ansprüche 1 bis 3, **dadurch gekennzeichnet, dass** das Barcode-Lesemodul (3) ein Gehäuse (30) aufweist, wobei eine Seite davon eine Scheibe (35) ist, um das Lesen von Barcodes zu ermöglichen und umfassend einen Scanner (31), wobei der Scanner (31) durch eine Folie (34) mit einer in dem Gehäuse des Lesers enthaltenen Controllerkarte (32) verbunden ist.

5. Steuerterminal nach Anspruch 4, **dadurch gekennzeichnet, dass** das Barcode-Lesemodul (3) weiterhin einen Erkennungssensor (33) aufweist, der mit der Controllerkarte (32) verbunden ist und von der Controllerkarte (32) gesteuert wird, wobei der Erkennungssensor dafür konfiguriert ist:
• das Vorhandensein eines Objekts vor der Scheibe (35) zu erkennen, und
• ein Signal an die Controllerkarte (32) zu senden, die den Scanner (31) zum Einschalten auffordert.

6. Steuerterminal nach einem der Ansprüche 4 bis 5, **dadurch gekennzeichnet, dass** die Scheibe (35) beidseitig entspiegelt wurde um die Erkennung und das Lesen der Barcodes zu vereinfachen.

7. Steuerterminal nach einem der Ansprüche 1 bis 6, **dadurch gekennzeichnet, dass** die Schließvorrichtung (8) des Kastens (4) von einer elektronischen Karte (7) gesteuert ist, die von einer im Terminal enthaltenen zusätzlichen autonomen Stromversorgung (12) versorgt wird.

8. Steuerterminal nach Anspruch 7, **dadurch gekennzeichnet, dass** es mindestens einen Temperatursensor (61) und mindestens einen Ventilator (60) aufweist, der einerseits mit der elektronischen Karte (7), die die Schließung des Kastens (8) steuert, und anderseits mit der zusätzlichen Stromversorgung (12) des Steuerterminals verbunden sind, wobei das Einschalten des Ventilators von der elektronischen Karte (7) aufgefordert wird, wenn die von dem Temperatursensors (61) erfassten Innentemperatur des Terminals eine Schwellenwert überschreitet, die ein einem Speicherplatz auf der elektronischen Karte (7) gespeichert ist.

9. Steuerterminal nach Anspruch 8, **dadurch gekennzeichnet, dass** jede elektronische Anordnung (21) des Terminals mit zusätzlichen Vorrichtungen einschließlich eines Barcode-Lesemoduls (3), eines Druckers (52), und eines Zahlungssystems umfassend einen Bankkartenleser (51), einen Lautsprecher (50) und ein Eingabemittel (53) verbunden ist.

## Claims

1. Control terminal including:
• a chamber (4) comprising at least one door equipped with a closing device (8), the door further comprising a plurality of openings and mounted pivotably on a frame,
• at least one interactive touch system including:
∘ a power supply (11) connected to the mains (1) including a plurality of outputs having different voltage, intensity and power, as a function of the type of equipment to be supplied,
∘ a touch display (20), comprising a hard protective surface (26) glued to the touchscreen of the display, the hard protective surface (26) projecting from the display and having a thickness adapted to drop in an opening in the door flush with the outer surface of the chamber,
∘ an electronic assembly (21), including a motherboard connected to the power supply (11) and itself comprising at least one processor and at least one memory space as well as a plurality of input/output plugs making it possible to connect thereto the different elements of the interactive touch system and of the control terminal,
said electronic assembly (21) being connected electronically to the touch display, ensuring at least supply of the control signals for control of the display as well as the data to be displayed on the screen of the display and including communication means capable of receiving the data to be displayed on the screen and program updates,
∘ a converter board (22) for conversion of signals for control of the touch display, which is connected to the touch display, the board being connected to the power supply (11) and also connected and driven by the electronic assembly (21), being capable of ensuring the conversion of control signals from the electronic assembly (21), to video signals for the screen of the corresponding touch display (20),
∘ an electronic board (23) capable of controlling switching of the backlighting system, the board being connected to the power supply (11) and also connected and driven by the electronic assembly (21),
∘ a touch controller (24) connected to the touch display (20) is connected to the electronic assembly (21), allowing conversion of the signal, generated by the display further to touching of the screen, to an electrical signal which can be interpreted by the electronic assembly,
• additional items of equipment among which are:
∘ a barcode reader module (3), and/or
∘ a printer (52), and/or
∘ a banking system including at least:
a) a bank card reader (51), and
b) an input means (53),
**characterised in that**
- said electronic assembly (21), said converter board (22), said electronic board (23) and said touch controller (24) of the corresponding display being incorporated in the back of said touch display, wherein the supply for the other items of equipment passes through chamber reinforcing bars, wherein said additional items of equipment are all connected and controlled by said electronic assembly (21) and supplied by the electronic assembly (21), or said power supply (11) of the corresponding interactive touch system (2),
- said interactive touch system and said additional items of equipment are incorporated in the openings in the door,
the control terminal being further **characterised in that** it includes two interactive touch systems disposed back to back, each display (20) being driven by its own electronic assembly (21), each electronic assembly being connected to a plurality of additional items of equipment included in the interactive systems, each element of the terminal being furthermore connected to only one electronic assembly (21), the two electronic assemblies (21) of the terminal being independent.

2. Control terminal according to the preceding claim, **characterised in that** the chamber comprises a plurality of reinforcing bars which are preferably disposed so as to form an X-shaped central reinforcement.

3. Control terminal according to any one of claims 1 to 2, **characterised in that** the banking system also comprises a loudspeaker (50) connected to the electronic assembly (21) via an audio socket.

4. Control terminal according to any one of claims 1 to 3, **characterised in that** the barcode reader module (3) comprises a casing (30) of which one face is a window (35) to allow the reading of barcodes and incorporating a scanner (31), the scanner (31) being connected via a flat cable (34) to a controller board (32) also included in the casing of the reader.

5. Control terminal according to claim 4, **characterised in that** the barcode reader module (3) also includes a detection sensor (33) connected and supplied by the controller board (32), said detection sensor (33) is configured:
• to detect the presence of an object placed in front of the window (35), and
• to send a signal to the controller board (32) which controls switching on of the scanner (31).

6. Control terminal according to any one of claims 4 to 5, **characterised in that** the window (35) has been given anti-reflection treatment on both faces in order to facilitate the detection and reading of barcodes.

7. Control tenninal according to any one of claims 1 to 6, **characterised in that** the closing system (8) for the chamber (4) is driven by an electronic board (7) supplied by an additional autonomous power supply (12) included in the terminal.

8. Control terminal according to claim 7, **characterised in that** it comprises at least one temperature probe (61) and at least one fan (60) connected on the one hand to the electronic board (7) for control of closing of the chamber (8) and on the other hand to the additional supply (12) to the terminal, switching on of the fan being controlled by the electronic board (7) when the internal temperature of the terminal detected by the temperature sensor (61) exceeds a threshold value recorded in a memory space of the electronic board (7).

9. Control terminal according to claim 8, **characterised in that** each electronic assembly (21) of the terminal is connected to additional items of equipment among which are a barcode reader module (3), a printer (52), and a banking system including a bank card reader (51), a loudspeaker (50) and an input means (53).
